# FASCICULE DE BREVET EUROPEEN

(11) **EP 0 752 777 B1**
(45) Date de publication et mention de la délivrance du brevet: **24.01.2001**
(21) Numéro de dépôt: 96401479.9
(22) Date de dépôt: 04.07.1996
(51) Int. Cl.: H04L 12/56, H04Q 11/04

(54) **Réseau de connexion de cellules ATM**
ATM-Koppelfeld
ATM connection network

(30) Priorité: 07.07.1995 FR 9508253
(43) Date de publication de la demande: 08.01.1997
(73) Titulaire: ALCATEL, 75008 Paris (FR)
(72) Inventeur: Dieudonne, Marc, 91430 Igny (FR); Katzschner, Lothar, 70469 Stuttgart (DE)
(74) Mandataire: Pothet, Jean Rémy Emile Ludovic

(56) Documents cités:
- EP-A- 0 602 693
- FR-A- 2 570 914
- US-A- 5 355 372
- IEEE INFOCOM'94 THE CONFERENCE ON COMPUTER COMMUNICATIONS, 12 Juin 1994, TORONTO CA, pages 1420-1427, XP000496607 H. SAIDI ET AL.: "Guaranteed cell sequence in nonblocking multi-channel switching"
- ISS'95 INTERNATIONAL SWITCHING SYMPOSIUM 1995, 23 Avril 1995, BERLIN, DE, pages 398-402, XP000495690 L. NEDERLOF ET AL.: ""A New Distributed Restoration Algorithm to protect ATM Meshed Networks against Link and Node Failures"
- IEEE / ACM TRANSACTIONS ON NETWORKING, vol. 2, no. 5, Octobre 1994, NEW YORK US, pages 497-507, XP000477928 T-H LEE ET AL.: "Diagnosis of single faults in bitonic sorters"

## Description

La présente invention concerne un réseau de connexion pour la commutation d'informations se présentant sous la forme de cellules transmises conformément à la technique ATM (Asynchronous Transfer Mode, en anglais), aussi appelée multiplexage temporel asynchrone, ce réseau étant de type dit "à trajets multiples et à auto-acheminement par cellules".

Dans de tels réseaux de connexion, le temps d'une communication, des cellules séparées par des intervalles généralement variables doivent être acheminées d'un accès d'entrée à un accès de sortie, ce qui permet un transfert de données entre un terminal d'émission connecté à l'accès d'entrée et un terminal de réception connecté à l'accès de sortie. Le réseau, à tout moment établit une multiplicité de telles communications. A cet effet, le réseau de connexion comprend des commutateurs qui sont généralement arrangés en plusieurs étages. Les accès d'entrée sont connectés aux ports d'entrée de commutateurs d'un étage d'entrée, les accès de sortie aux ports de sortie de commutateurs d'un étage de sortie, tandis que les ports de sortie des commutateurs de l'étage d'entrée sont connectés aux ports d'entrée des commutateurs de l'étage de sortie par des commutateurs d'un ou plusieurs étages intermédiaires. Un tel réseau de connexion est dit "à trajets multiples", lorsqu'il est aménagé pour qu'il y ait plusieurs trajets possibles entre tout accès d'entrée et tout accès de sortie. Un tel réseau de connexion est dit "à auto-acheminement par cellules", lorsqu'il achemine chacune des cellules d'une même connexion de façon autonome, à l'aide d'une information de trajet contenue dans la cellule et qui définit en elle-même, dans chaque étage du réseau de connexion, la destination de cette cellule.

Moyennant que les cellules d'une même communication soient également distribuées sur les trajets possibles, l'avantage des réseaux de connexion de ce dernier type est que le trafic de cellules global peut se répartir dans le réseau de façon homogène et que le blocage par encombrement de cellules dans une partie du réseau de connexion peut ainsi être sensiblement réduit, voire complètement supprimé. Toutefois, un inconvénient d'un tel type de réseau de connexion est que, en cas de défaillance dans le réseau, ce qui affecte certaines cellules seulement, empruntant l'élément défaillant du réseau de connexion, on ne peut aisément localiser cet élément défaillant. La maintenance est difficile et demande des mesures spécifiques, donc coûteuses.

Le document US-A-5 355 372 est un exemple d'un tel réseau.

Le document qui reflète le plus l'état de la technique est la demande de brevet français n° **2.727.818**, publiée après la date de priorité. Elle décrit un réseau de connexion du type permettant que les cellules d'une même communication soient également distribuées sur les trajets possibles. Pendant la transmission des cellules successives d'une même communication par N trajets possibles, il effectue :
- une recensement des N trajets possibles pour les cellules de cette communication,
- l'établissement de N sous-connexions correspondant aux N trajets possibles,
- la distribution systématiquement égale des cellules de la communication sur les N sous-connexions établies,
- l'assemblage ensuite des cellules acheminées par ces N sous-connexions.
Dans ce qui suit, on qualifiera un tel réseau de connexion de réseau "à sous-connexions dirigées".
Un tel réseau souffre également de l'inconvénient cité plus haut.

L'invention a ainsi pour principal objet un réseau de connexion du type que l'on vient d'indiquer en dernier, c'est-à-dire un réseau de connexion pour la commutation d'informations se présentant sous la forme de cellules transmises conformément à la technique ATM, ce réseau étant de type dit "à trajets multiples, auto-acheminement par cellules et sous-connexions dirigées", qui soit aménagé pour faciliter la localisation des défaillances.

Cet objet est atteint par un réseau conforme à l'invention qui se caractérise en ce que des moyens de détection sont prévus à chaque accès de sortie du réseau de connexion pour, dans le cadre d'une communication empruntant cette sortie, déceler l'absence d'une cellule, dite cellule manquante, et des moyens de registre d'incident, pour enregistrer alors une indication d'incident définissant qu'une cellule est manquante et indiquant le trajet qu'aurait dû emprunter la cellule manquante à partir d'une information de trajet dérivée d'une autre cellule de la même communication.

Avantageusement, cette information de trajet est constituée par des données de trajet fournies par une cellule de la même communication, antérieure à la constatation qu'une cellule de cette communication est manquante, lesdits moyens de détection comprenant des moyens de mémoire aménagés pour enregistrer lesdites données de trajets lors de la transmission de ladite cellule antérieure et pour les restituer à la transmission d'une cellule incidente, afin qu'elles constituent ladite information de trajet dans ladite indication d'incident.

Selon une variante, cette information de trajet est constituée par des données de trajet fournies par une cellule de la même communication disponibles au moment de la constatation qu'une cellule de cette communication est manquante et qui constituent ladite information de trajet dans ladite indication d'incident.

Lorsque le réseau de connexion est agencé pour maintenir la séquence des cellules, c'est-à-dire pour fournir sur un accès de sortie les cellules d'une communication dans l'ordre selon lequel ces cellules sont arrivées sur un accès d'entrée, soit qu'il préserve cette séquence par un acheminement contrôlé des cellules dans les commutateurs des différents étages du réseau, soit qu'il la restaure, en chaque accès de sortie, à l'aide de moyens de reséquencement, l'application de ce qui précède consiste tout simplement à comparer le numéro de séquence d'une cellule incidente avec celui de la cellule précédente de la communication considérée. Ce numéro de séquence doit avoir augmenté d'une unité par rapport au précédent. Sinon, une cellule est présumée manquante.

Selon une forme de mise en oeuvre, lesdits moyens de détection comprennent des moyens de mémoire aménagés pour enregistrer un numéro de séquence à la transmission d'une cellule antérieure d'une communication considérée et pour le restituer à la transmission d'une cellule incidente de cette communication considérée, ainsi que des moyens de comparaison entre ledit numéro de séquence de cellule antérieure et ledit numéro de séquence de cellule incidente, présumant qu'une cellule est manquante, lorsque le numéro de séquence de la cellule incidente est différent de celui de ladite cellule précédente augmenté d'une constante.

Selon une forme de mise en oeuvre, chaque accès d'entrée comprend des moyens de séquencement qui attribuent un numéro de séquence à chaque cellule d'une même communication et l'insèrent dans les données de trajet de cette cellule, ainsi que des moyens de traitement de trajet inscrivant notamment dans chaque cellule une valeur de choix de trajet indiquant quel trajet la cellule doit emprunter parmis une pluralité de trajets possibles.

Additionnellement, chaque commutateur du réseau de connexion comprend des moyens intervenant lorsque, dans le cadre d'une communication de diffusion, l'acheminement à donner par ce commutateur à une cellule incidente demande le recours à une mémoire de trajet de diffusion fournissant une information d'acheminement, pour faire entrer ladite information d'acheminement dans ladite indication de trajet.

L'invention s'applique ainsi tout aussi bien aux communications de diffusion qu'aux communications de point à point.

Les différents objets et caractéristiques de la présente invention apparaîtront plus clairement dans la description qui va suivre de modes de mise oeuvre de l'invention, donnée à titre d'exemple non limitatif, en se reportant aux figures annexées qui représentent :
- la figure 1, le diagramme des liaisons d'un réseau de connexion dans lequel peut être appliquée la présente invention,
- la figure 2, une cellule acheminée dans le réseau de connexion de la figure 1,
- la figure 3, les moyens prévus dans une unité d'accès (uae) mentionnée à la figure 1 pour préparer des cellules conformes à la figure 2,
- la figure 4, les moyens de marquage de trajet prévus dans chacun des commutateurs du réseau de connexion de la figure 1 pour inscrire dans chaque cellule des données d'acheminement indiquant quel trajet la cellule a emprunté, dans le cas d'une connexion de diffusion,
- la figure 5, les moyens prévus dans une unité de sortie mentionnée à la figure 1 (uas) pour exploiter des cellules conformes à la figure 2 et pour enregistrer une indication d'incident dans le cas de la détection d'une cellule manquante.
- la figure 6, une variante des moyens de la figure 5.

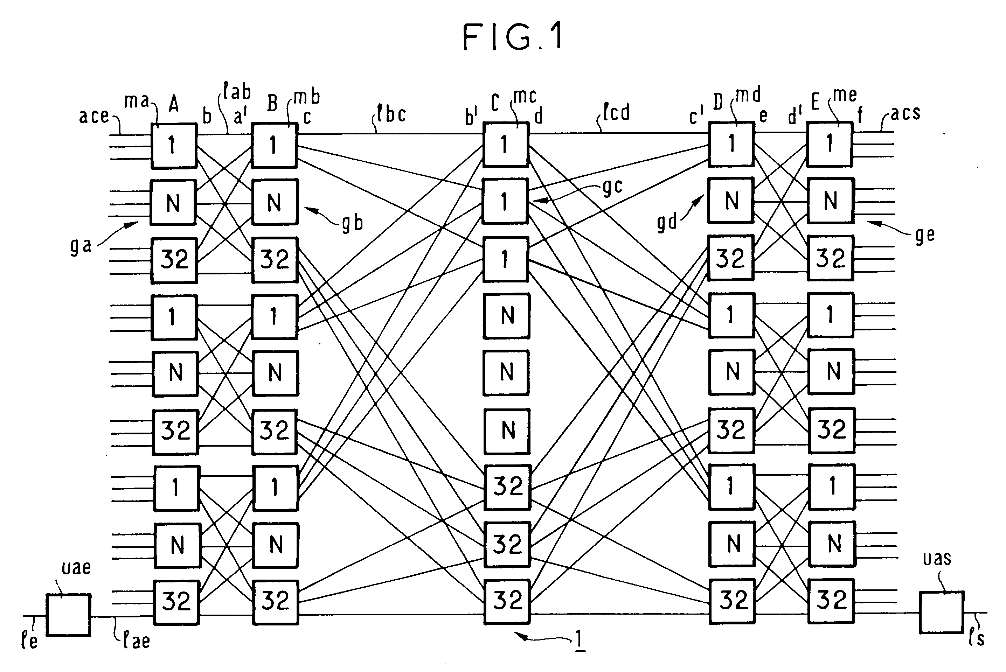

La figure 1 représente un réseau de connexion 1 pour la commutation d'informations se présentant sous la forme de cellules transmises conformément à la technique ATM, ce réseau étant de type dit "à trajets multiples, auto-acheminement par cellules et sous-connexions dirigées".

Il comprend des accès d'entrée tels que ace, des commutateurs d'un étage A, tels que ma, des commutateurs d'un étage B, tels que mb, des commutateurs d'un étage C, tels que mc, des commutateurs d'un étage D, tels que md, des commutateurs d'un étage E, tels que me, des accès de sortie tels que acs.

Chaque commutateur est représenté par un rectangle contenant un numéro, 1, N, 32. Dans le sens vertical, les commutateurs consécutifs de numéros 1, N, 32 illustrent un groupe de 32 commutateurs similaires. C'est ainsi que la figure représente, dans l'étage A, des groupes de 32 commutateurs, tels que ga, étagés verticalement. Aux ports d'entrée de ces commutateurs, à gauche sur la figure, qui constituent en même temps les accès d'entrée du réseau de connexion 1, sont connectées des liaisons d'entrées, telles que le, équipées d'unités d'accès, telles que uae, chacune reliée au port d'accès d'entrée qui lui appartient par une liaison d'accès d'entrée lae. Chaque commutateur possède par exemple 32 ports d'entrée et 32 ports de sortie.

La figure représente également, dans l'étage B, tout comme dans l'étage A, des groupes de 32 commutateurs, tels que gb, étagés verticalement. Les liaisons telles que lab entre l'étage A et l'étage B sont arrangées séparément, à chaque fois entre un groupe de 32 commutateurs de l'étage A et un groupe de 32 commutateurs de l'étage B, tels que ga et gb. Plus précisément, chacune des sorties de chaque commutateur de l'étage A est couplée par une liaison à un commutateur différent de l'étage B et, de même, chacune des entrées de chaque commutateur de l'étage B est couplée par une liaison à un commutateur différent de l'étage A, et cela au sein de deux groupes associés, tels que ga et gb.

On retrouve la même disposition au sein des étages E et D, par symétrie, où des groupes tels que ge et gd sont homologues des groupes ga et gb.

L'interconnexion entre des groupes de commutateurs ainsi définis des étages B et D est réalisée par l'étage C dont les commutateurs sont répartis en ensembles tels que gc, chaque ensemble ayant par exemple 32 commutateurs, autant que chaque commutateur de l'étage B comporte de ports de sortie. Ces commutateurs d'un ensemble portent tous le même numéro qui est 1 pour les commutateurs de l'ensemble gc. On a aussi illustré des ensembles de commutateurs de numéros N et 32 pour indiquer qu'il y a 32 ensembles. Les 32 commutateurs "1" de l'étage C interconnectent l'ensemble que constituent les 32 commutateurs "1" de l'étage B avec celui que constituent les 32 commutateurs "1" de l'étage D. Plus précisément, chacune des sorties de chaque commutateur "1" de l'étage B est couplée par une liaison telle que lbc à un commutateur "1" différent de l'étage C et, de même, chacune des entrées de chaque commutateur de l'étage C est couplée par une liaison semblable à un commutateur "1" différent de l'étage B. Et des liaisons similaires telles que lcd sont prévues entre les commutateur "1" de l'étage C et les commutateurs "1" de l'étage D. Il en va de même pour les autres ensembles.

Il est ainsi clair qu'une cellule parvenant à l'accès d'entrée ace du commutateur ma de l'étage A peut être acheminée jusqu'à l'accès de sortie acs du commutateur me de l'étage E par l'intermédiaire de l'un quelconque des 32 commutateurs du groupe gb, de l'un quelconque des 32 x 32 commutateurs de l'étage C et de l'un des commutateurs du groupe gd. On remarquera que l'identité de ce dernier est définie dès que celle du commutateur de l'étage C l'est elle-même. Cela signifie non moins clairement que chaque cellule dispose ainsi de 32 x 32 = 1024 trajets. Conformément à la demande de brevet mentionnée au début de ce texte, 1024 sous-connexions correspondront à ces 1024 trajets et ces 1024 sous-connexions seront cycliquement utilisées pour acheminer les cellules successives de la communication considérée. Il en va de même pour toutes les communications en même temps, ce qui fait que les débits de cellules de toutes les communications en cours sont mélangés dans le réseau de connexion et que le débit de cellules traversant chaque commutateur est une fraction du débit global qu'achemine le réseau de connexion, la même pour chacun d'eux, ce qui évite tout engorgement.

Additionnellement on mentionnera encore que les accès de sortie du réseau de connexion sont chacun pourvu d'une unité d'accès de sortie telle que uas, menant à une liaison de sortie ls.

Bien entendu, la figure 1 fournit un exemple très particulier de réseau de connexion, juste pour fixer les idées, et il est bien connu dans cette technique que de nombreuses variantes sont possibles, prévoyant par exemple des commutateurs ayant plus ou moins d'entrées et de sorties, des commutateurs rectangulaires pour diminuer la charge des liaisons et des commutateurs situés au centre du réseau de connexion, plusieurs liaisons entre deux commutateurs donnés plutôt qu'une seule, etc.

L'acheminement des cellules d'une communication est déterminé à partir de l'unité d'accès telle que uae de l'accès d'entrée par lequel s'établit cette communication. Les moyens employés à cette fin seront ceux de la demande de brevet mentionnée précédemment.

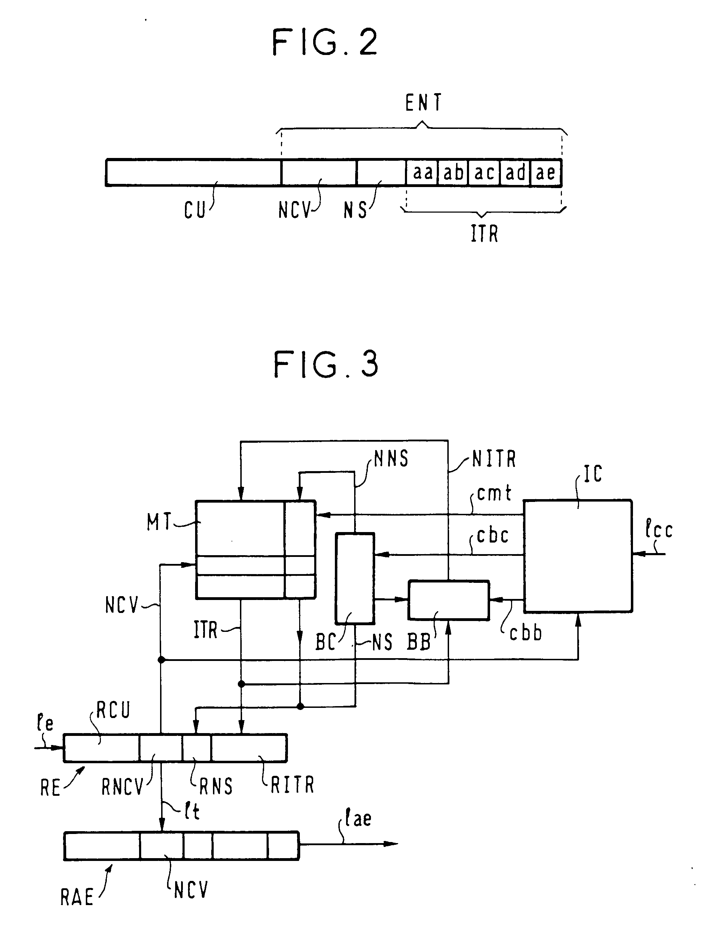

Ces moyens, contenus dans l'unité d'accès d'entrée uae, permettront, à partir de l'information reçue sur la liaison le, quel que soit le format la contenant, de composer des cellules successives correspondant par exemple au format illustré à la figure 2.

La cellule illustrée à la figure 2 comprend ainsi une en-tête ENT suivie d'une charge utile CU contenant l'information de communication proprement dite. L'en-tête ENT comprend notamment (parmi d'autres données non représentées) une indication de trajet ITR, un numéro de séquence NS et un indicateur de référence NCV.

L'indication de trajet ITR correspond, pour chaque cellule d'une même communication à l'une des sous-connexions disponibles. En fait elle définit complètement cette sous-connexion en spécifiant, par les valeurs aa, ab, ac, ad, ae, chacune destinée à un commutateur de chacun des étages A, B..., E, l'identité de la sortie sur laquelle doit être transmise la cellule parvenant à ce commutateur. Dans le cas indiqué, où les commutateurs ont 32 sorties, chacune de ces valeurs est un nombre binaire à 5 bits.

Le numéro de séquence NS est un nombre binaire à quelques bits (5, par exemple) qui prend les différentes valeurs possibles de ce nombre, cycliquement, dans les cellules successives d'une même communication. Il permet aisément de contrôler l'ordre d'arrivée des cellules à l'accès de sortie du réseau de connexion et détecter s'il en manque une.

L'indicateur de référence NCV identifie la communication. Il est attribué par un organe de commande des communications qui ne sera pas décrit dans cette demande, car il se situe en dehors du cadre de la présente invention. Il est utilisé entre autres dans le cas d'une communication de diffusion, d'un point vers plusieurs points, d'un accès d'entrée vers plusieurs accès de sortie. Il est alors utilisé dans certains commutateurs du réseau de connexion pour fournir, à l'aide d'informations de trajets préalablement distribuées à ces commutateurs, l'identité de la ou des sorties de ce commutateur sur lesquelles doit être retransmise la cellule. On reviendra plus tard sur cet aspect de la commutation dans le réseau de connexion.

On va maintenant se tourner vers la figure 3 qui représente un mode de réalisation de l'unité d'accès uae de la figure 1 qui reçoit des cellules d'entrée et prépare des cellules conformes à celle de la figure 2.

La liaison d'entrée le est connectée à un registre d'entrée RE. Cette liaison d'entrée le fournit pour chaque cellule d'entrée, au moins une charge utile CU et un indicateur de référence de communication RCV. La charge utile prend place dans la partie RCU du registre RE. L'indicateur de référence prend place dans la partie RNCV du registre RE. En même temps, cet indicateur de référence est utilisé comme adresse pour lire une mémoire de communications MT ayant un emplacement d'enregistrement par communication. Dans l'emplacement adressé sont lus un numéro de séquence NS qui prend place dans un emplacement RNS du registre RE et une indication de trajet ITR qui prend place dans un emplacement RITR du registre RE. Par ailleurs, le numéro de séquence NS est fourni à une unité BC de traitement du séquencement qui fournit, selon un algorithme de séquencement, un nouveau numéro de séquence NNS. L'algorithme de séquence peut se résumer simplement dans l'addition d'une unité modulo 2^{s}, s étant le nombre de bit du numéro NS. Par ailleurs encore, l'indication de trajet ITR est communiquée à une unité BB de traitement de trajets qui fournit, selon un algorithme de trajets, une nouvelle indication de trajet NITR. Cet algorithme peut se résumer, en reprenant l'exemple précédent, en l'addition d'une unité modulo NT à une valeur de choix de trajet constitué par l'assemblage des valeurs aa et ab de la cellule de la figure 2, dont on rappelle qu'elles ont chacune 5 bits et identifient chacun le port de sortie à emprunter, dans le commutateur de l'étage A, pour la première, et dans le commutateur de l'étage B, pour la deuxième. En effet, ces deux valeurs réunies représentent bien l'identité de l'une des matrices de l'étage C, c'est-à-dire l'identité d'un des 1024 trajets possibles pour toute connexion de point à point dans le réseau de connexion de la figure 1. Dans ce cas, bien sûr, NT est précisément 2¹⁰ = 1024. Les autres valeurs de l'indication ITR qui identifient la sortie à laquelle est destinée la cellule restent évidemment inchangées.

Le nouveau numéro de séquence NNS et la nouvelle indication de trajet NITR sont fournies à une entrée de la mémoire MT et l'opération de lecture que l'on vient de mentionner est suivie d'une opération d'écriture grâce à laquelle ces deux données sont inscrites dans le même emplacement de mémoire, l'adresse NCV restant inchangée, pour y devenir les données correspondantes NS et ITR à utiliser pour la cellule suivante de la même communication.

A cet instant, le contenu du registre RE est transféré dans le registre RAE par une liaison lt, pour être ensuite fourni sur la liaison d'accès d'entrée lae (voir aussi la figure 1). Le registre RE devient ainsi disponible pour recevoir la cellule suivante, de la même ou d'une autre communication.

L'unité d'accès d'entrée de la figure 3 comprend en outre une unité de commande IC qui reçoit des données définissant les communications à établir d'un organe de commande des communications non représenté, car ne faisant pas partie de l'invention, comme indiqué précédemment. Ces données lui sont transmises par une liaison de commande lcc et comprennent essentiellement, une information à inscrire dans la mémoire MT, par la liaison cmt, à une adresse correspondant à un indicateur de référence de communication (NCV), cette information constituant une indication de trajet ITR et comprenant (voir aussi la figure 2) des valeurs prédéterminées aa et ab, et un ensemble de valeurs ac, ad, ae identifiant une sortie du réseau de connexion à laquelle doivent être adressée les cellules de la communication considérée.

C'est en outre l'unité de commande IC qui rythme le fonctionnement de la mémoire MT et des unités BC et BB, par les liaisons cmt, cbc et cbb.

Dans ce qui précède, implicitement, on a traité du cas d'une communication de point à point.

Dans le cas d'une communication de point à multipoint, comme on l'a déjà indiqué, l'indication de trajet ITR est partiellement absente des cellules d'une communication de diffusion acheminées dans le réseau, au moment de leur introduction dans un port d'entrée de l'étage A. C'est l'indicateur de référence NCV qui, traduit dans certains des commutateurs recevant une telle cellule, définit sur quel ou quels ports de sortie du commutateur doit être retransmise la cellule. Le rôle de l'unité de la figure 3 peut être alors exactement le même que celui qui vient d'être décrit, excepté que l'unité de commande IC inscrit dans la mémoire MT une valeur conventionnelle pour la partie de l'indication ITR (voir figure 2) qui correspond aux valeurs ac, ad, ae.

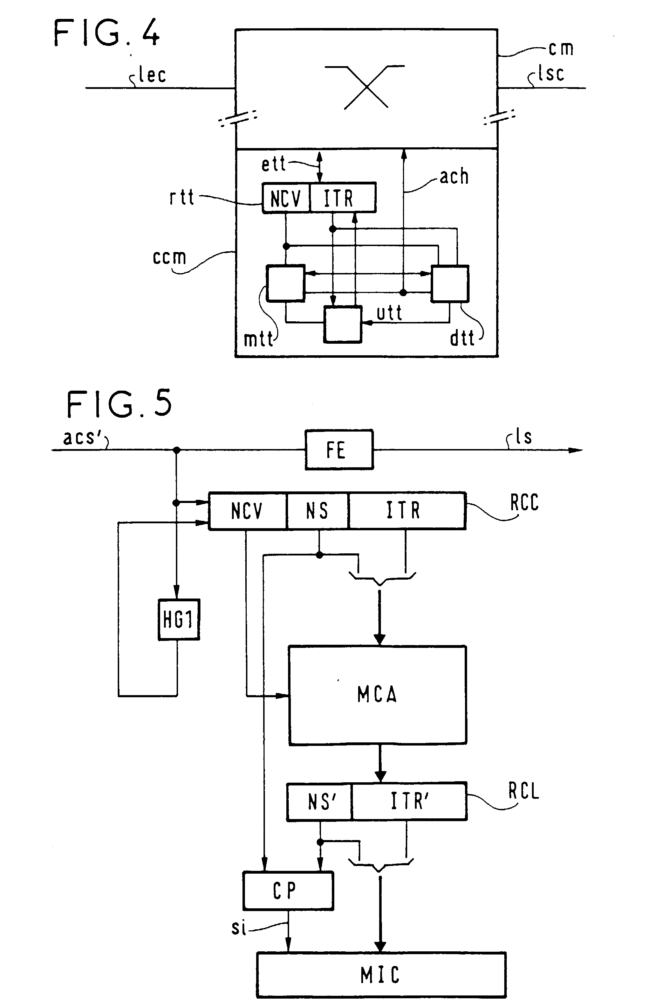

On va maintenant se tourner vers la figure 4 qui représente, schématiquement, des moyens de marquage de trajet prévus dans chacun des commutateurs du réseau de connexion de la figure 1, pour inscrire dans chaque cellule des données d'acheminement indiquant quel trajet la cellule a emprunté.

La figure 4 représente à cette fin un commutateur comprenant un dispositif de commutation de cellules cm auquel sont connectées des liaisons d'entrées telles que lec et des liaisons de sortie telles que lsc, et son dispositif de commande ccm. Dans ce dernier, on a représenté un registre de traitement de trajet rtt, ainsi qu'un dispositif de commande d'acheminement dtt, une mémoire de trajets de diffusion mtt et une unité de traitement d'indication de trajet utt.

Une cellule parvenant sur la liaison lec, les données d'acheminement NCV et ITR de son en-tête (voir figure 2) sont fournies au registre rtt, par une liaison ett, et de là au dispositif de commande d'acheminement dtt. Celui-ci, dans le cas d'une communication de point à point sélectionne dans l'indication ITR la valeur correspondant à l'étage dans lequel se trouve le commutateur considéré, aa par exemple. Il transmet cette information sur la liaison ach au dispositif de commutation de cellule cm. Simultanément, le dispositif dtt met en action l'unité utt dont le rôle est, par exemple, selon un procédé bien connu, de permuter les valeurs aa à ae, dans l'indication ITR que détient le registre rtt, de sorte que la valeur ab prenne la place de la valeur aa qui elle-même prend celle de la valeur ae, et ainsi de suite. Cela permet que chaque commutateur, sans savoir dans quel étage il se trouve, prenne toujours au même endroit dans l'indication ITR la valeur qui lui est destinée. Le dispositif de commutation de cellules cm, recevant des données d'acheminement ainsi modifiées sur la liaison ett et une information d'acheminement sur la liaison ach, modifie en conséquence la cellule reçue, puis l'enregistre et l'inscrit pour être retransmise sur une liaison de sortie telle que lsc désignée par cette information d'acheminement. Lorsque cela sera possible, c'est-à-dire après d'autres cellules éventuellement en attente et prioritaires, la cellule considérée, ainsi modifiée, sera retransmise sur la sortie désignée du commutateur de la figure 4. On retiendra de ce qui précède que l'indication de trajet complète ITR demeure dans la cellule, ce qui permettra de savoir quel trajet la cellule a emprunté dans le réseau de connexion et même, plus précisément, lequel des trajets possibles elle a emprunté.

Dans le cas d'une communication de diffusion, le dispositif dtt actionne la mémoire de trajets de diffusion qui reçoit l'indicateur de référence NCV et fournit en conséquence une information d'acheminement qui est transmise sur la liaison ach, à la place de la valeur tirée de l'indication de trajet ITR. Cette information est transmise en même temps à l'unité utt qui la fait entrer dans les valeurs de l'indication de trajet ITR à la place de celle qui aurait été utilisée s'il s'était agi d'une communication de point à point. A cette différence près, l'acheminement de la cellule sur une sortie est le même que celui que l'on a décrit plus haut. Si la cellule doit être retransmise sur une deuxième sortie, le dispositif dtt l'apprend de la mémoire mtt et réitère l'opération. Bien entendu selon des techniques connues, il est possible d'exécuter en parallèle et de mettre en commun certaines parties de ces opérations réitérées pour gagner du temps. Ceci mis à part, le résultat est que l'indication ITR d'un exemplaire de la cellule considérée va recevoir ainsi une valeur correspondant à l'acheminement effectué dans le commutateur et qu'un tel exemplaire arrivera sur une sortie du réseau de connexion en ayant reçu une succession de valeurs qui compléteront son indication de trajet ITR, de sorte que celle-ci définira le trajet emprunté par la cellule dans le réseau de connexion.

Ainsi, toutes les cellules arrivant aux sorties du réseau de connexion comprennent une telle indication de trajet ITR, complète ou complétée, caractérisant le chemin qu'elles ont emprunté dans le réseau de connexion.

On va donc se tourner maintenant, en se reportant à la figure 5, vers les moyens qui sont prévus dans une unité de sortie mentionnée à la figure 1 pour exploiter des cellules conforme à la figure 2 et pour enregistrer une indication d'incident dans le cas de la détection d'une cellule manquante.

Les moyens illustrés par la figure 5 comprennent :
- un registre d'arrivée de cellule RCC recevant des données de l'en-tête de chaque cellule transmise en sortie du réseau de connexion vers la liaison de sortie ls,
- une mémoire de trajet de cellule MCA mémorisant des données relatives aux différentes communications établies sur la liaison ls,
- un registre de cellule antérieure RCL dans lequel vient s'inscrire l'information prélablement enregistrée dans la mémoire MCA à l'occasion d'une cellule antérieure d'une communication, lorsqu'une cellule de cette communication est transmise sur la liaison ls,
- un comparateur CP servant à détecter une cellule manquante,
- une mémoire MIC constituant un registre d'incidents
- une horloge de liaison HG.

Chaque cellule apparaissant sur la liaison acs' qui est l'une des liaisons de sortie du réseau de connexion de la figure 1 est transmise au dispositif de transmission FE qui ne sera pas davantage décrit ici, car il sort du cadre de l'invention.

Entre la sortie du réseau de connexion tel que celui de la figure 1 et la liaison acs' peut être inséré un reséquenceur. Un tel dispositif est décrit dans les demandes de brevets européens n°0602281 et 0602282 ayant toutes les deux pour titre "Dispositif de reséquencement pour un noeud de système de commutation de cellules". Le temps de traversée du réseau de connexion étant différent selon les cellules d'une même communication, en raison de durées d'attente variables dans les commutateurs traversés, comme indiqué plus haut, le reséquenceur a pour fonction de remettre les cellules dans l'ordre des numéros de séquence.

A chacune des cellules transmises sur la liaison acs', l'horloge liaison HG, pilote un cycle de fonctionnement du dispositif de la figure 5. Elle déclenche d'abord le fonctionnement du registre RCC afin qu'il enregistre l'en-tête de la cellule comprenant l'indicateur de référence d'acheminement NCV, le numéro de séquence NS et l'indication de trajet ITR.

Dès qu'elle est présente dans le registre RCC, elle est enregistrée dans la mémoire de trajet de cellule MCA, dans un emplacement propre à la communication à laquelle appartient la cellule en question, désigné par une adresse qui est fournie par l'indicateur NCV.

Préalablement, cependant, l'information inscrite dans le même emplacement, à la transmission de la précédente cellule de la même communication, et conservée là jusqu'à la transmission de la cellule considérée, est lue pour être inscrite dans le registre RCL. Les numéros de séquence de la cellule considérée, NS, et de la cellule antérieure NS' sont comparés, dans un comparateur CP qui constitue un dispositif de détection permettant de déceler l'absence d'une cellule. Si les deux numéros se suivent (NS' = NS + 1), tout est normal. Rien d'autre ne se produit.

Si les deux numéros ne se suivent pas on dira qu'une cellule est manquante. Dans ce cas, le comparateur CP fournit un signal si qui déclenche simplement l'enregistrement dans une mémoire d'incident MIC du contenu du registre RCL, auquel est optionnellement joint le numéro de séquence NS de la cellule considérée. L'information enregistrée concerne essentiellement une cellule correctement acheminée dans le réseau de connexion de la figure 1 avant la cellule considérée. Elle permet de savoir par où elle est passée. Comme on a vu que les cellules successives d'une même communications empruntent sucessivement, dans un ordre donné les différents trajets disponibles, il est aisé d'en déduire quel trajet aurait dû suivre la cellule suivante de la même communication. L'accumulation de telles informations, et leur analyse statistique permet de mettre en évidence que les cellules manquantes devaient emprunter toutes un élément déterminé du réseau de connexion, que l'on peut supposer défaillant. Cela peut donner lieu à une action corrective.

Si par la suite, une cellule manquante parvient sur la liaison acs', le comparateur CP le décélera aussi. L'information enregistrée dans la mémoire d'incident MIC contient en effet le numéro de séquence de cette cellule transmise hors séquence. L'interprétation des informations enregistrées dans la mémoire d'incidents MIC permettra de mettre en évidence cette circonstance particulière et, par exemple, d'écarter cette cellule de la catégorie des cellules manquantes.

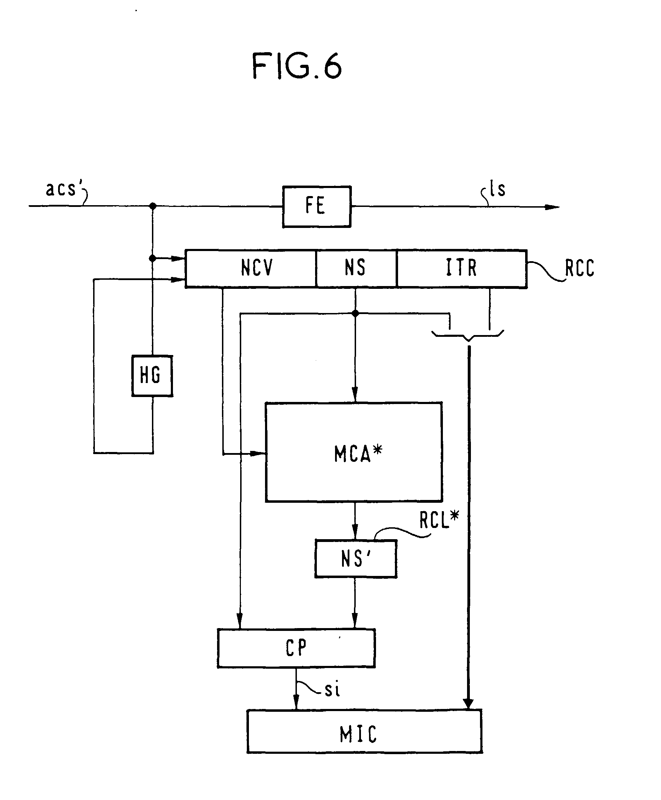

On décrira maintenant sommairement, en se reportant à la figure 6, une variante des moyens de la figure 5. Les éléments conservés du dispositif de la figure 5 possèdent les mêmes références, tandis que ceux qui ont été modifiés portent un astérisque.

On retrouve donc, inchangés, la liaison acs', le dispositif de transmission FE, la liaison ls, l'horloge HG et le registre d'arrivée de cellule RCC. La mémoire MCA* est semblable à la mémoire MCA, sauf qu'elle enregistre seulement le numéro de séquence NS de la cellule incidente. De la même manière, le registre de cellule antérieure RCL* ne lit que le numéro de séquence antérieur NS'. Le comparateur CP est inchangé. La mémoire MCI n'est pas modifiée, mais elle enregistre, en cas de cellule manquante, le numéro de séquence NS et l'indication de trajet ITR de la cellule incidente, au lieu de données de trajets issues de la mémoire MCA. Le fonctionnement est le même que précédemment, à cette exception près qui signifie que, en cas de cellule manquante, on enregistre l'indication de trajet de la cellule incidente, la cellule manquante étant présumée être celle qui la précédait, alors que dans le cas de la figure 5 on enregistre l'indication de trajet d'une cellule transmise précédemment, la cellule manquante étant présumée être la cellule qui suivait immédiatement cette cellule précédente. Dans tous les cas où une seule cellule est manquante, les deux solutions sont équivalentes.

Les indications d'incidents inscrites dans la mémoire MCI peuvent être exploitées de bien des manières. La plus simple, lorsque le réseau de connexion est d'une fiabilité élevée, consiste simplement à surveiller le niveau de remplissage de la mémoirer MCI. Tant que ce niveau n'augmente qu'à un rythme lent et de façon aléatoire, on n'est en présence que de fautes sporadiques qui peuvent être oubliées. Par contre, si le niveau se met à augmenter soudain à un rythme soutenu, une alarme doit être donnée et le contenu de la mémoire MCI doit faire l'objet d'un traitement statistique visant à déterminer le trajet qu'aurait dû emprunter chaque cellule manquante. Dans le cas du dispositif de la figure 5, on fait l'hypothèse que la cellule manquante était celle qui suivait immédiatement celle dont les données de trajets on été enregistrées. Connaissant l'algorithme appliqué par l'unité BB dans les unités d'accès d'entrée du réseau telles qu'uae (figure 3), il est aisé de définir le trajet attribué à cette cellule manquante. Dans le cas de la variante de la figure 6, on fait l'hypothèse que la cellule manquante était celle qui précédait immédiatement celle qui dont les données de trajet ont été enregistrées. Son trajet sera tout aussi aisément déterminé. Ces trajets de cellules manquantes peuvent être exprimés sous la forme d'une suite de 5 numéro de commutateurs, un par étage du réseau de connexion, qu'il suffit de comparer. S'il apparaît qu'un même numéro revient sans cesse, dans un des étages, le commutateur qu'il identifie est probablement en défaut. Une mesure de maintenance automatique, avant le remplacement de ce commutateur consistera à modifier l'algorithme appliqué dans les unités BB des unités d'accès d'entrées (figure 3) de manière que soient supprimés des trajets possibles au moins tous ceux qui passent par cette matrice.

Il est bien évident que les descriptions qui précèdent n'ont été données qu'à titre d'exemple seulement et que de nombreuses variantes peuvent être imaginées sans sortir pour autant du cadre de l'invention telle que définie dans les revendications. Les valeurs numériques en particulier variront avec chaque application. En outre on mentionnera qu'il n'est pas nécessaire que les cellules transmises à travers le réseau de connexion portent un numéro de séquence (NS), une durée anormalement longue entre cellules successives peut également indiquer qu'une cellule est manquante. De même, l'examen comparé des indications de trajets de cellules qui se suivent peut indiquer que la séquence définie par l'algorithme de séquencement n'est plus respectée, ce qui caractérise aussi qu'une cellule est manquante.

## Revendications

1. Réseau de connexion pour la commutation d'informations se présentant sous la forme de cellules transmises conformément à la technique ATM, ce réseau étant de type dit "à trajets multiples, auto-acheminement par cellules et sous-connexions dirigées", ce réseau comportant des moyens pour :
- recenser tous les trajets possibles pour les cellules d'une communication,
- établir des sous-connexions correspondant respectivement à chacun des trajets possibles,
- distribuer de manière systématiquement égale les cellules de ladite communication sur les sous-connexions ainsi établies,
- assembler ensuite les cellules acheminées par ces sous-connexions ;
**caractérisé** en ce que des moyens de détection (RCC, MCA, RCL, CP ; RCC, MCA*, RCL*, CP) sont prévus à chaque accès de sortie du réseau de connexion pour, dans le cadre d'une communication empruntant cette sortie, déceler l'absence d'une cellule, dite cellule manquante, et des moyens de registre d'incident (MCI), pour enregistrer alors une indication d'incident définissant qu'une cellule est manquante et indiquant le trajet qu'aurait dû emprunter la cellule manquante à partir d'une information de trajet dérivée d'une autre cellule de la même communication.

2. Réseau de connexion conforme à la revendication 1, caractérisé en ce que cette information de trajet est constituée par des données de trajet (ITR')fournies par une cellule de la même communication, antérieure à la constatation qu'une cellule de cette communication est manquante, lesdits moyens de détection comprenant des moyens de mémoire (MCA) aménagés pour enregistrer lesdites données de trajets (ITR) lors de la transmission de ladite cellule antérieure et pour les restituer (ITR') à la transmission d'une cellule incidente, afin qu'elles constituent ladite information de trajet dans ladite indication d'incident.

3. Réseau de connexion conforme à la revendication 1, caractérisé en ce que cette information de trajet est constituée par des données de trajet (ITR) fournies par une cellule de la même communication disponibles au moment de la constatation qu'une cellule de cette communication est manquante et qui constituent ladite information de trajet dans ladite indication d'incident.

4. Réseau de connexion conforme à la revendication 2 ou 3, caractérisé en ce que lesdits moyens de détection comprenent des moyens de mémoire (MCA ; MCA*)aménagés pour enregistrer un numéro de séquence à la transmission d'une cellule antérieure d'une communication considérée et pour le restituer à la transmission d'une cellule incidente de cette communication considérée, ainsi que des moyens de comparaison (CP) entre ledit numéro de séquence de cellule antérieure (NS') et ledit numéro de séquence de cellule incidente (NS), présumant qu'une cellule est manquante, lorsque le numéro de séquence de la cellule incidente est différent de celui de ladite cellule précédente augmenté d'une constante.

5. Réseau de connexion conforme à la revendication 4 caractérisé en ce que ladite constante est 1.

6. Réseau de connexion conforme à l'une quelconque des revendication précédentes, caractérisé en ce que chaque accès d'entrée (uae) comprend des moyens de séquencement (BC, MT) qui attribuent un numéro de séquence (NS) à chaque cellule d'une même communication et l'insèrent dans les données de trajet de cette cellule, ainsi que des moyens de traitement de trajet (BB, MT) inscrivant notamment dans chaque cellule une valeur de choix de trajet (aa, ab) indiquant quel trajet la cellule doit emprunter par mis une pluralité de trajets possibles.

7. Réseau de connexion conforme à l'une quelconque des revendications précédentes, caractérisé en ce que chaque commutateur du réseau de connexion comprend des moyens (dtt, utt) intervenant lorsque, dans le cadre d'une communication de diffusion, l'acheminement à donner par ce commutateur à une cellule incidente demande le recours à une mémoire de trajet de diffusion (mtt) fournissant une information d'acheminement, pour faire entrer ladite information d'acheminement dans ladite indication de trajet (ITR).

## Claims

1. Switching network for switching data in the form of cells transmitted in asynchronous transfer mode, said network being of the "multiple path, cell auto-routing and directed sub-connection" type, this network including means for:
- determining all the possible paths for the cells of a call,
- setting up the sub-connections respectively corresponding to each of the possible paths,
- systematically and uniformly distributing the cells of said call between the sub-connections thus set up
- then assembling the cells routed by these sub-connections;
characterized in that detector means (RCC, MCA, RCL, CP; RCC, MCA*, RCL*, CP) are provided at each output port of said switching network to detect the absence of a cell, called a missing cell, in a call using that output and incident register means (MIC) for storing in response thereto an incident indication signifying that a cell is missing and indicating the path that said missing cell must have taken from path data derived from another cell of the same call.

2. Switching network according to claim 1, characterized in that said path data (ITR') was supplied by a cell of the same call before it was realized that a cell of that call was missing, said detector means comprising memory means (MCA) adapted to store said path data (ITR) at the time of transmission of said earlier cell and to restore it (ITR') at the time of transmission of an incoming cell in order that it constitute said path data in said incident indication.

3. Switching network according to claim 1, characterized in that said path data (ITR) is provided by a cell of the same call available at the time it is realized that a cell of that call is missing and constitutes said path data in said incident indication.

4. Switching network according to claim 2 or 3, characterized in that said detector means comprise memory means (MCA; MCA*) adapted to store a sequence number at the time of transmission of an earlier cell of a given call and for restoring it at the time of transmitting an incoming cell of the call in question and means (CP) for comparing said earlier cell sequence number (NS') and said incoming cell sequence number (NS) on the assumption that a cell is missing if said sequence number of said incoming cell is not the same as that of said preceding cell increased by a constant.

5. Switching network according to claim 4, characterized in that said constant is 1.

6. Switching network according to any one of the above claims, characterized in that each input port (uae) comprises sequencer means (BC, MT) that allocate a sequence number (NS) to each cell of the same call and insert it in the path data of that cell and path processor means (BB, MT) writing into each cell a path choice value (aa, ab) indicating which path from a plurality of possible paths said cell must take.

7. Switching network according to any one of the above claims, characterized in that each switch of said switching network comprises means (dtt, utt) operative when in the context of a broadcast call the routing to be imparted by said switch to an incoming cell requires recourse to a broadcast path memory (mtt) supplying routing data in order to enter said routing data into said path indicator (ITR).

## Patentansprüche

1. Koppelfeld zur Vermittlung von in Form von nach der ATM-Technik übertragenen Zellen vorliegender Informationen, wobei das Koppelfeld vom sogenannten "Mehrwegtyp mit automatischer Wegsuche durch Zellen und gerichteten Unterverbindungen" ist, mit Mitteln zum:
- Erfassen aller möglichen Wege für die Zellen einer Kommunikation,
- Etablieren von jeweils jedem der möglichen Wege entsprechenden Unterverbindungen,
- systematischen Gleichverteilen der Zellen jeder Kommunikation auf die so etablierten Unterverbindungen,
- anschließenden Zusammenfügen der von den Unterverbindungen beförderten Zellen,
dadurch gekennzeichnet, daß Erfassungsmittel (RCC, MCA, RCL, CP; RCC, MCA*, RCL*, CP) an jedem Ausgang des Koppelfeldes vorgesehen sind, um im Rahmen einer diesen Ausgang verwendenden Kommunikation die Abwesenheit einer Zelle, als fehlende Zelle bezeichnet, zu erfassen, sowie mit Ereignisregistermitteln (MCI), um dann eine Ereignisanzeige aufzuzeichnen, die festlegt, daß eine Zelle fehlt, und den Weg angibt, den die fehlende Zelle hätte nehmen sollen, ausgehend von einer von einer anderen Zelle der gleichen Kommunikation abgeleiteten Weginformation.

2. Koppelfeld nach Anspruch 1, dadurch gekennzeichnet, daß diese Weginformation durch Wegdaten (ITR') gebildet sind, die von einer Zelle der gleichen Kommunikation vor der Feststellung geliefert sind, daß eine Zelle dieser Kommunikation fehlt, wobei die Erfassungsmittel Speichermittel (MCA) umfassen, die eingerichtet sind, um die Wegdaten (ITR) bei der Übertragung jeder vorhergehenden Zelle aufzuzeichnen und sie bei der Übertragung einer eintreffenden Zelle wiederzugeben (ITR'), damit sie die Weginformation in dieser Ereignisanzeige bilden.

3. Koppelfeld nach Anspruch 1, dadurch gekennzeichnet, daß die Weginformation durch Wegdaten (ITR) gebildet ist, die von einer Zelle der gleichen Kommunikation geliefert werden, die im Moment der Feststellung, daß eine Zelle dieser Kommunikation fehlt, verfügbar sind, und die die Weginformation in der Ereignisanzeige bilden.

4. Koppelfeld nach Anspruch 2 oder 3, dadurch gekennzeichnet, daß die Erfassungsmittel Speichermittel (MCA; MCA*), die eingerichtet sind, um eine Sequenznummer bei der Übertragung einer vorhergehenden Zelle einer betrachteten Kommunikation aufzuzeichnen und sie bei der Übertragung einer eintreffenden Zelle dieser betrachteten Kommunikation wiederzugeben, sowie Mittel zum Vergleichen (CP) zwischen der Sequenznummer der vorhergehenden Zelle (NS`) und der Sequenznummer der eintreffenden Zelle (NS) umfassen, wobei angenommen wird, daß eine Zelle fehlt, wenn die Sequenznummer der eintreffenden Zelle von der um eine Konstante erhöhten Sequenznummer der vorhergehenden Zelle verschieden ist.

5. Koppelfeld nach Anspruch 4, dadurch gekennzeichnet, daß die Konstante 1 ist.

6. Koppelfeld nach einem beliebigen der vorhergehenden Ansprüche, dadurch gekennzeichnet, daß jeder Eingang (uae) Sequenziermittel (BC, MT), die jeder Zelle einer gleichen Kommunikation eine Sequenznummer (NS) zuteilen und sie in die Wegdaten dieser Zelle einfügen, sowie Mittel zur Wegverarbeitung (BB, MT) umfaßt, die insbesondere in jede Zelle einen Wegauswahlwert (aa, ab) eintragen, der angibt, welchen Weg die Zelle unter einer Mehrzahl möglicher Wege nehmen soll.

7. Koppelfeld nach einem beliebigen der vorhergehenden Ansprüche, dadurch gekennzeichnet, daß jedes Koppelelement des Koppelfeldes Mittel (dtt, utt) umfaßt, die wirksam werden, wenn im Falle einer Punkt-zu-Mehrpunkt-Kommunikation die Leitung einer eintreffenden Zelle durch das Koppelelement den Rückgriff auf einen Punkt-zu-Mehrpunkt-Wegspeicher (mtt) erfordert, der eine Leitweginformation liefert, um diese Leitweginformation in die Wegangabe (itr) einfließen zu lassen.
